# EUROPEAN PATENT SPECIFICATION

(11) **EP 2 405 550 B1**
(45) Date of publication and mention of the grant of the patent: **28.02.2018**
(21) Application number: 10748422.2
(22) Date of filing: 19.01.2010
(51) Int. Cl.: H02G 5/06

(54) **HERMETICALLY-SEALED INSULATED DEVICE**
LUFTDICHT ISOLIERTE VORRICHTUNG
DISPOSITIF ISOLÉ HERMÉTIQUE

(30) Priority: 06.03.2009 JP 2009052763
(43) Date of publication of application: 11.01.2012
(73) Proprietor: Kabushiki Kaisha Toshiba, Minato-ku Tokyo 105-8001 (JP)
(72) Inventor: NOJIMA, Kenichi, Tokyo 105-8001 (JP); SATO, Masayuki, Tokyo 105-8001 (JP); HANAI, Masahiro, Tokyo 105-8001 (JP); TAKEI, Masafumi, Tokyo 105-8001 (JP); HIRANO, Yoshihiko, Tokyo 105-8001 (JP); ANDO, Hideyasu, Tokyo 105-8001 (JP)
(74) Representative: Hoffmann Eitle
(86) International application number: PCT/JP2010/000260
(87) International publication number: WO 2010/100818

(56) References cited:
- EP-A1- 0 519 228
- DE-C1- 10 009 474
- JP-A- 8 149 667
- JP-A- 8 149 667
- JP-A- 8 237 836
- JP-A- H03 251 013
- JP-A- 2009 284 651
- US-A- 3 898 408

## Description

### TECHNICAL FIELD

The present invention relates to a hermetically sealed insulating apparatus such as a gas-filled switchgear.

### BACKGROUND ART

Concerning a hermetically sealed insulating apparatus such as a gas-filled switchgear where a high voltage conductor supported by an insulator is hermetically sealed in an insulating gas-filled container, it is a challenge to achieve a further miniaturization by such means as the streamlining of the insulation designing and three-phase enclosure for the sake of cost reduction and reduction of environmental load.

The size of the metal container of the hermetically sealed insulating apparatus is determined by insulation and thermal designing etc. A key factor in insulation designing is to examine the influence of a foreign object existing (adhering) on/to the inside surface of the metal container, if any, upon the insulation performance.

When there is a foreign object in the hermetically sealed metal container in which a high voltage conductor is supposed by an insulator and which is filled with insulating gas, the foreign object may move around in the metal container because of forces that are produced by the interaction between electric charges supplied from the metal container and the like to the foreign object and the operating voltage.

If the hermetically sealed insulating apparatus is reduced in size, the increased electric field at the inside surface of the metal container tends to activate the movement of the foreign object lying in the metal container. Excessive movement of the foreign object in the metal container may affect the insulation performance. The longer the foreign object is in shape, the higher the possibility that the movement of the foreign object increases to affect the insulation performance more greatly.

To suppress the movement of foreign objects under the operating voltage, enhanced foreign object control is implemented by performing foreign object removal in manufacturing processes such as a foreign object control process so that long foreign objects will not get into the metal container. In addition, it is needed to design the field intensity at the inside surface of the metal container under the operating voltage so that uncontrollable small foreign objects will not float and move around beyond a designed height. Here, the height refers to the distance between the inside surface of the metal container and the foreign object.

Since the field intensity at the inside surface of the metal container depends on the distance between the high voltage conductor and the inside surface of the metal container, the metal container needs to be made greater in order to suppress the floating height of the foreign object. This has been a constraining factor in miniaturizing the hermetically sealed insulating apparatus.

As a method of relaxing the foreign object-based constraint on design, there has been known a technique of neutralizing the effect of the suppression of the foreign object movement on the insulation performance. For example, as disclosed in patent documents 1 to 3, a technology for deactivating the behavior of the foreign object by using an insulating film that is formed by coating of an insulating material (insulating coating technology) has been known.

According to the insulating coating technology, the inside surface of the metal container of the hermetically sealed insulating apparatus is coated with a highly-insulating epoxy resin or the like, whereby the supply of electric charges from the inside surface of the metal container to the foreign object is suppressed to make movement difficult. The more difficult it is for the foreign object to move, the higher the electric field at the inside surface of the metal container can be made and the more compact the hermetically sealed container can be made.

It is important to form an insulating film that has a high insulation capability and is less prone to exfoliation, and methods for implementation have been proposed.

### CITAITON LIST

### PATENT DOCUMENTS

Patent Document 1: Japanese Patent Application Laid-Open Publication No. 58-111203
Patent Document 2: Japanese Patent Application Laid-Open Publication No. 02-79711
Patent Document 3: Japanese Patent No. 3028975
Patent Document 4: Japanese Patent Application Laid-Open Publication No. 2004-129343
Patent Document 5: Japanese Patent Application Laid-Open Publication No. 2007-14149
Patent Document 6: Japanese Patent Application Laid-Open Publication No. 2004-165355
DE 100 09 474 C1 discloses a hermetically sealed insulating apparatus comprising a high voltage conductor, a metal container and a nonlinear resistance film that is formed on an inside surface of the metal container, wherein the nonlinear resistance characteristics decrease in resistance with increasing electric current density.
JP 08-149667 A relates to a gas-insulated bus having a high-voltage conductor, an insulator and a spacer.
EP 0 519 228 A1 illustrates a high voltage device having an insulated metallic conductor.
US 3 898 408 A discloses a circuit interrupter with improved trap for removing particles from fluid insulating material.
JP H03-251013 A relates to gas insulating equipment with improved insulation performance.

### SUMMARY OF INVENTION

### TECHNICAL PROBREMS

The insulating material (coating material) used for the foregoing conventional insulating film, however, has the following problem.

Conventionally-proposed coating materials tend to cause an electric field concentration on a portion that includes a foreign object, the insulating gas, and the coating material. Higher concentration of the electric field may lead to a partial discharge in the vicinity of the foreign object, which can supply electric charges to the foreign object.

When a partial discharge occurs, the foreign object suddenly moves around widely, affecting the insulation performance. Intrusion of an overvoltage such as a lightening surge can increase the electric field at the inside surface of the metal container, in which case the electric field at the electric field concentration portion may become even higher. This means a possibility, though extremely low, that the foreign object suddenly moves around a wide area. To suppress such sudden movements over a wide range, it is needed to ease the field concentration between the coating material and the foreign object to suppress the occurrence of a partial discharge or field emission.

In association with the foregoing problem, the coating materials that have conventionally been put to practical use also have the following problem. The conventional coating materials have a constant high insulation property, and can thus suppress at normal operating voltage not only the movement of foreign objects that are shorter than the intended length to be controlled during manufacturing but also the electric field-based movement of foreign objects that are longer than or equal to the length to be controlled during manufacturing.

In general, the hermetically sealed insulating apparatus is subjected, after assembly, to a test of applying a voltage higher than the operating voltage, i.e., an integrity check test. The purpose is so that foreign objects longer than the length to be controlled during manufacturing can be found and removed by using the electric field higher than under the operating voltage, in case such foreign objects are overlooked in the foreign object control process and remain in the metal container. Thorough foreign object control is implemented by such an integrity check test.

As described above, long foreign objects, and ones having a length greater than the control length in particular, have the propensity to be easily moved by the action of the electric field. The application of the voltage higher than the operating voltage in the integrity check test has the effect of ensuring that long foreign objects that may move around at the operating voltage be moved for detection. Foreign objects moving around in the container give impact vibrations to the inside of the metal container or cause partial discharges, which can be detected to find and remove the foreign objects.

If the insulating film is made of a coating of insulating material, however, the foreign objects are less likely to move and the foregoing impact vibrations or partial discharges are less likely to occur. Consequently, it is sometimes difficult to find a foreign object that exists in the metal container, if any.

Now, even if a foreign object lies on the surface layer of the insulating film where electric charges are unlikely to be supplied to and the foreign object is unlikely to move at the operating voltage, there is still a possibility that the foreign object may start to move because of mechanical impact vibrations or the like caused by the operation of the switchgear etc. There is also a possibility that the foreign object may start to move because of a partial discharge that is caused by a higher voltage such as a lightening impulse.

Once a foreign object longer than the control length starts moving, a partial discharge or field emission may occur in the vicinity of the foreign object, in which case electric charges can be supplied to the foreign object to further develop the movement of the foreign object. It is therefore desirable that a foreign object longer than the length to be controlled during manufacturing, if any, be moved and found without fail in the integrity check test.

Most of the insulating films that have conventionally been put to practical use are, however, made of insulating materials that have a stable high insulation property. Foreign objects are thus kept in a less movable state, which makes it difficult to find the foreign objects only by the application of the electric field in the integrity check test. Consequently, in order to find foreign objects greater than the length to be controlled during manufacturing in an integrity check test without fail, an additional operation is needed like applying vibrations to the metal container. Such a need is a constraint for the cost reduction of the hermetically sealed insulating apparatus through miniaturization.

To relax the constraint, it is needed to facilitate the movement of foreign objects under the high electric field in an integrity check test so that foreign objects greater than the control length, if any, can be easily found and removed. In the meantime, it has been a challenge to develop a technology that makes foreign objects unlikely to move at the operating voltage, thereby improving the insulation capability of the switchgear etc.

As for the coating technology, as disclosed in patent document 4, a structure of providing a nonlinear resistance coating on the barrier insulator aside from the insulating coating has been known. The structure is aimed to bring the potential of the barrier insulator close to that of the high voltage conductor when an overvoltage occurs on the high voltage conductor, not to improve the insulation reliability for a foreign object that lies on the inner surface of the container.

As disclosed in patent document 5, patent document 6, and the like, structures attached to the high voltage conductor have been known as an example of application of the nonlinear resistance material. Such structures are aimed to relax the electric field at the end of the high voltage conductor, not to improve the insulation reliability for a foreign object that lies on the inner surface of the container.

The present invention has been achieved in order to solve the foregoing problems, and it is an object thereof to control the behavior of foreign objects in the metal container of the hermetically sealed insulating apparatus to make the hermetically sealed insulating apparatus more compact and improve the insulation reliability.

### MEANS FOR SOLVING THE PROBREM

In order to achieve the object described above, there is presented a hermetically sealed insulating apparatus comprising: a high voltage conductor that extends in an axial direction; a metal container that covers the high voltage conductor so as to leave a radial gap to the high voltage conductor, the gap being filled with insulating gas; and a nonlinear resistance film that is formed on an inside surface of the metal container and is made of nonlinear resistance material having a nonlinear resistance characteristic of decreasing in resistance with an increasing current density, the nonlinear resistance film having a filler having a permittivity different from that of the nonlinear resistance material.

There is also presented a hermetically sealed insulating apparatus comprising: a high voltage conductor that extends in an axial direction; a metal container that covers the high voltage conductor so as to leave a radial gap to the high voltage conductor, the gap being filled with insulating gas; and a nonlinear resistance film that is formed on an inside surface of the metal container, is made of resin filled with nonlinear resistance material having a nonlinear resistance characteristic of decreasing in resistance with an increasing electric current density, and has a plurality of projections and depressions formed on its surface on the side of the high voltage conductor.

### ADVANTAGE OF THE INVENTION

According to the present invention, it is possible to control the behavior of foreign objects in the metal container of the hermetically sealed insulating apparatus to make the hermetically sealed insulating apparatus more compact and improve the insulation reliability.

### BREIF DESCRIOTION OF DRAWINGS

[FIG. 1] FIG. 1 is a partly-broken schematic longitudinal sectional view showing part of a hermetically sealed insulating apparatus according to a first embodiment of the present invention.
[FIG. 2] FIG. 2 is an enlarged longitudinal sectional view of the section II of FIG. 1.
[FIG. 3] FIG. 3A is a cross-sectional view taken along the line III-III of FIG. 1, with a representation of a stray capacitance, and FIG. 3B is an equivalent circuit diagram showing the current components of a current that flows in the nonlinear resistance film of FIG. 2.
[FIG. 4] FIG. 4 is a model diagram showing the state of electric field concentration in the vicinity of a foreign object on the surface layer of a conventional insulating film.
[FIG. 5] FIG. 5 is a model diagram showing the state of the electric field in the vicinity of a foreign object on the surface layer of the nonlinear resistance film of FIG. 2.
[FIG. 6] FIG. 6 is a graph showing the characteristic of the nonlinear resistance film formed on the inner surface of the metal container of FIG. 1, or the relationship between the current density and the applied voltage.
[FIG. 7] FIG. 7 is a longitudinal sectional view showing part of a nonlinear resistance film that is formed on the inside surface of the metal container of the hermetically sealed insulating apparatus according to a second embodiment of the present invention.
[FIG. 8] FIG. 8 is a graph showing the characteristic of the nonlinear resistance film formed on the inner surface of the metal container of FIG. 7, or the relationship between the current density and the applied voltage.
[FIG. 9] FIG. 9 is a longitudinal sectional view showing part of a nonlinear resistance film that is formed on the inside surface of the metal container of the hermetically sealed insulating apparatus according to a third embodiment of the present invention.
[FIG. 10] FIG. 10 is a longitudinal sectional view showing part of a nonlinear resistance film that is formed on the inside surface of the metal container of the hermetically sealed insulating apparatus according to a fourth embodiment of the present invention.
[FIG. 11] FIG. 11 is a partly-broken schematic longitudinal sectional view showing part of the hermetically sealed insulating apparatus according to the embodiment of FIG. 10, showing the behavior of a foreign object adhering to the nonlinear resistance film.
[FIG. 12] FIG. 12 is a longitudinal sectional view showing part of a nonlinear resistance film that is formed on the inside surface of the metal container of the hermetically sealed insulating apparatus according to a fifth embodiment of the present invention.

### DESCRIPTION OF EMBODIMENTS

Hereinafter, embodiments of the hermetically sealed insulating apparatus according to the present invention will be described with reference to the drawings.

### [First Embodiment]

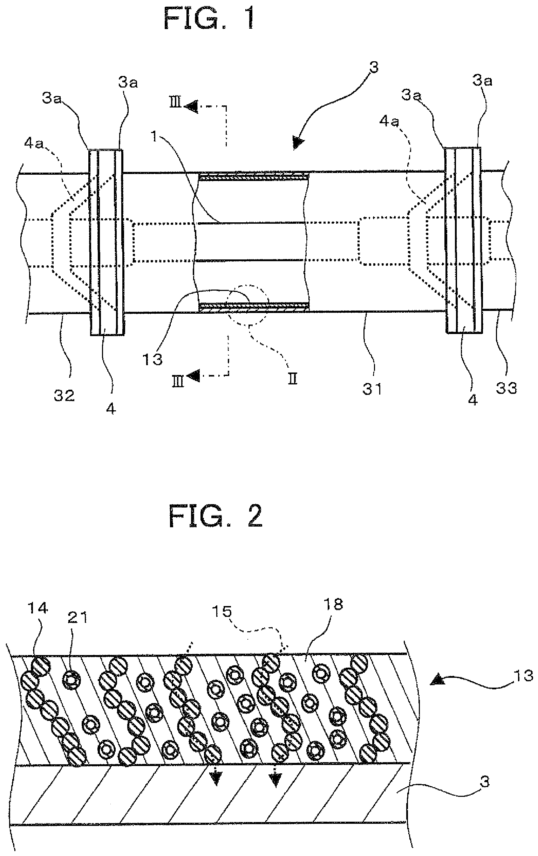

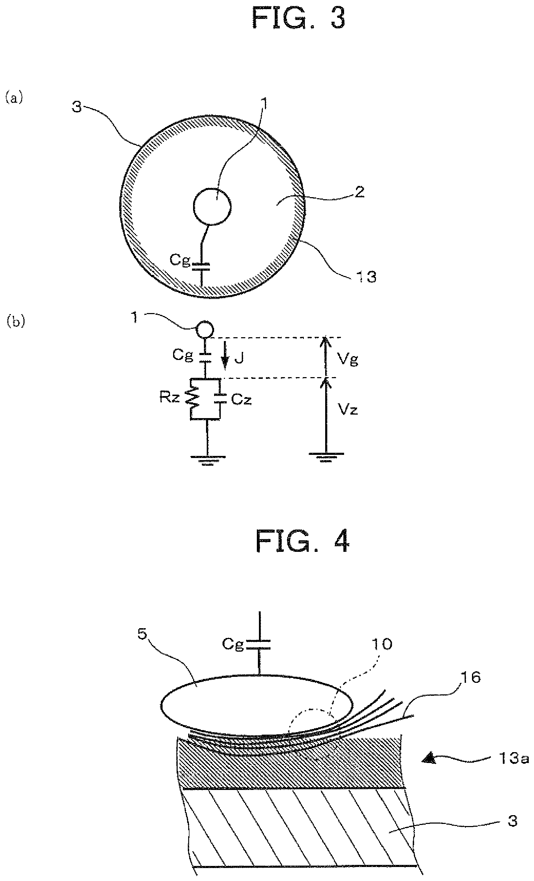

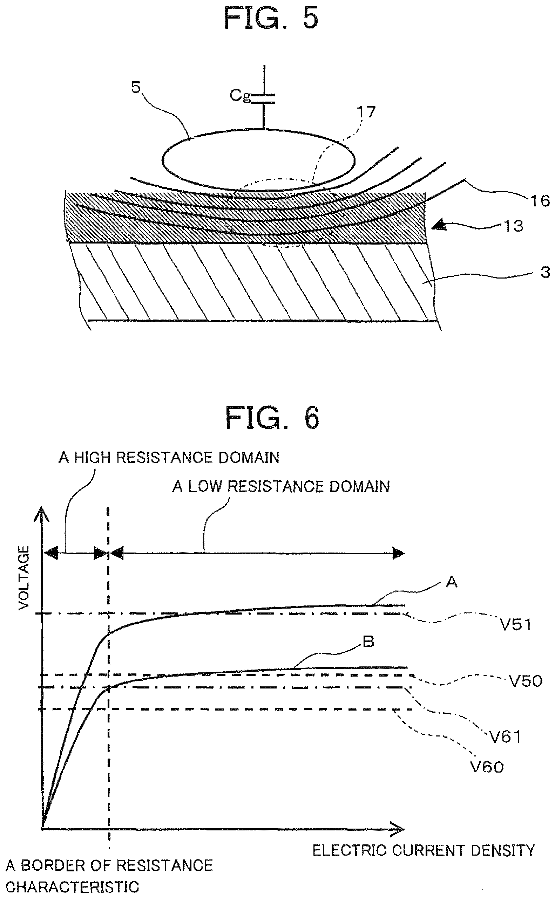

A first embodiment of the hermetically sealed insulating apparatus according to the present invention will be described with reference to FIGS. 1 to 6. FIG. 1 is a partly-broken schematic longitudinal sectional view showing part of the hermetically sealed insulating apparatus according to the present embodiment. FIG. 2 is an enlarged longitudinal sectional view of the section II of FIG. 1. FIG. 3A is a cross-sectional view taken along the line III-III of FIG. 1, with a representation of a stray capacitance. FIG. 3B is an equivalent circuit diagram of the electric current components of a electric current that flows in a nonlinear resistance film 13 of FIG. 2. FIG. 4 is a model diagram showing the state of electric field concentration in the vicinity of a foreign object 5 on the surface layer of a conventional insulating film 13a. FIG. 5 is a model diagram showing the state of the electric field in the vicinity of a foreign object 5 on the surface layer of the nonlinear resistance film 13 of FIG. 2. FIG. 6 is a graph showing the characteristic of the nonlinear resistance film 13 formed on the inside surface of the metal container 3 of FIG. 1, or the relationship between the electric current density and the applied voltage.

Initially, the configuration of the hermetically sealed insulating apparatus according to the present embodiment will be described. The hermetically sealed insulating apparatus according to the present embodiment includes: a metal container 3 which can be axially separated into a plurality of pieces; a high voltage conductor 1; and spacers 4.

The metal container 3 is generally cylindrical in shape, and is formed so that it can be separated into a plurality of pieces and connected together by cross sections perpendicular to the center axis of the cylinder. FIG. 1 shows an example of the metal container 3 where a second metal container 32 and a third metal container 33 are connected in series to respective ends of a first metal container 31. The first to third metal containers 31 to 33 can be separated from each other.

The metal container 3 which is separable into a plurality of pieces, i.e., the first metal container 31, the second metal container 32, and the third metal container 33 have end flange parts 3a on the periphery of the respective coupling portions. The first to third metal containers 31 to 33 are coupled by fastening the end flange parts 3a to each other with fastening means such as fastening bolts.

The high voltage conductor 1 is inserted generally through the center of the metal container 3 along the center axis of the cylindrical portions. The outside of the high voltage conductor 1 and the inside of the metal container 3 is filled with insulating gas 2 such as SF₆ gas.

The spacers 4 have insulating members 4a, and are arranged to partition the interior of the metal container 3 perpendicularly to the center axis of the cylinder. The spacers 4 are fixed by being sandwiched between the end flange parts 3a from both sides. Here, the spacers 4 are fastened so as to keep the metal container 3 airtight. The center portions of the spacers 4 are formed to support the high voltage conductor 1 that is inserted through the metal container 3.

A nonlinear resistance film 13 having a nonlinear electrical resistance characteristic is formed on the inside surface of the metal container 3. As shown in FIG. 2, the nonlinear resistance film 13 is formed by applying resin 18 to the inside surface of the metal container 3 in the form of a film, the resin 18 being filled with nonlinear resistance powder material 14, such as ZnO, that has a nonlinear resistance characteristic of decreasing in resistance with an increasing electric current density and hollow particulate members (hollow beads 21) that have a permittivity lower than that of the nonlinear resistance powder material 14.

The particles of the nonlinear resistance powder material 14 with which the resin 18 is filled are electrically connected in series or in parallel to each other in the resin 18. That is, the particles of the nonlinear resistance powder material 14 are connected to each other to form main paths 15 for a leak electric current in the resin 18, whereby serial and parallel electrical circuits having the foregoing nonlinear electrical resistance characteristic are formed.

The formation of such electrical circuits produces the nonlinear resistance film 13 that has a desired nonlinear electrical resistance characteristic. The manufacturing conditions including the amount of filling of the nonlinear resistance powder material 14 can be adjusted to give the nonlinear resistance film 13 a desired electrical resistance characteristic.

As shown in FIGS. 3A and 3B, when, for example, an alternating-current voltage is applied to, for example, a high voltage circuit (not shown) of the hermetically sealed insulating apparatus, the nonlinear resistance film 13 undergoes an alternating-current voltage that is generally determined by a stray capacitance Cg between the nonlinear resistance film 13 and the high voltage conductor 1. The resulting current flowing into the nonlinear resistance film 13, i.e., the electric current J that flows through the stray capacitance is divided between a capacitance component Cz and a nonlinear resistance component Rz of the nonlinear resistance film 13. Here, Vg represents the voltage acting on the gap that is filled with the insulating gas 2, and Vz the voltage acting on the nonlinear resistance film 13.

It is preferred that the electrical resistance characteristic of the nonlinear resistance film 13 be adjusted in advance according to the density of the electric current flowing into the nonlinear resistance component Rz by using the foregoing method of adjustment or the like.

Suppose, as shown in FIG. 4, that a foreign object 5 lies on the surface layer of a film that is formed on the inside surface of the hermetically sealed metal container 3, such as a conventional insulating film 13a. Typically, a portion where the electric field concentrates, i.e., an electric field concentration portion 10 where equipotential lines 16 are at dense intervals appears in the vicinity of the foreign object 5. When, for example, the electric field of the electric field concentration portion 10 exceeds the ionization field of the insulating gas 2, there occurs a partial discharge. The occurrence of a partial discharge in the vicinity of the foreign object 5 supplies an electric charge to the foreign object 5, facilitating the movement of the foreign object 5 in the metal container 3. It should be noted that the insulating film 13a is assumed to have an infinite electrical resistance.

The situation where the foreign object 5 can move easily may deteriorate the insulation performance. Moreover, depending on the material of the foreign object 5, the electric field of the electric field concentration portion 10 can sometimes exceed the electron emission field of the material of the foreign object 5 in intensity so that the foreign object 5 is charged up for easier movement.

The electric current flowing between the film on the inner side of the metal container 3, e.g., the insulating film 13a and the foreign object 5 has a density that is mainly determined by such factors as a potential difference between the foreign object 5 and the insulating film 13a, the permittivity of the insulating gas 2, and the applied voltage (alternating-current voltage) which has a commercial frequency, for example. The electric current flowing into the insulating film 13a flows through the insulating film 13a as divided between the capacitance component and the resistance component of the nonlinear resistance film 13.

Suppose, for example, that the electrical resistance characteristic of the insulating film 13a is set so that the electric current density that shows a nonlinear characteristic is smaller than the resistance component of the electric current density that is determined by the electron emission field or critical field and the permittivity of the insulating gas 2. Such a setting of the electrical resistance characteristic can relax the field concentration in the vicinity of the foreign object 5 and form a electric field relaxed portion 17 in the vicinity of the foreign object 5 so that a partial discharge is less likely to occur. That is, the resistance of the film in the vicinity of the foreign object 5 where the electric field concentrates is lowered to bring the potential of the film in the vicinity of the foreign object 5 close to that of the foreign object 5. As a result, the intervals of the equipotential lines 16 in the vicinity of the foreign object 5 can be widened into almost equal intervals in the thickness direction to relax the electric field so that field emission and partial discharge are less likely to occur.

Here, the field concentration in the vicinity of the foreign object 5 is relaxed to form the electric field relaxed portion 17 in the vicinity of the foreign object 5. The electric field relaxed portion 17 can suppress the occurrence of a partial discharge. More specifically, the resistance of the nonlinear resistance film 13 in the vicinity of the foreign object 5 where the electric field concentrates is lowered to bring the ambient film potential close to the potential of the foreign object 5. The intervals of the equipotential lines 16 in the vicinity of the foreign object 5 are thereby widened to relax the electric field and suppress the occurrence of a partial discharge and electron emission.

In the field relaxed state, the nonlinear resistance film 13 undergoes a uniform electric field such that the equipotential lines 16 lie at almost equal intervals in the thickness direction. The intensity of such a uniform electric field varies with the permittivity, thickness, and other factors of the nonlinear resistance film 13.

One reason is that the voltage applied to the nonlinear resistance film 13 is determined by the division ratio between the impedance consisting of the capacitance component Cz and the resistance component Rz of the nonlinear resistance film 13 and the impedance consisting of the stray capacitance Cg in the gas (Cg / (Cg + Cz) ≈ Cg / Cz). Another reason is that the capacitance component Cz of the nonlinear resistance film 13 depends on the permittivity and thickness of the film, and the electric field occurring in the nonlinear resistance film 13 has a value given by the voltage applied to the nonlinear resistance film 13, divided by the thickness. That is, the permittivity and thickness of the nonlinear resistance film 13 can be adjusted to adjust the electric field occurring in the nonlinear resistance film 13.

As shown in FIG. 6, the resin 18 which is filled with the nonlinear resistance powder material 14 and has the nonlinear resistance characteristic has a not-straight nonlinear relationship such that the increase of applied voltage falls with an increasing electric current density.

If the nonlinear resistance film 13 has the characteristic B shown in FIG. 6, such a uniform electric field brings the nonlinear resistance film 13 into a low resistance domain and can supply sufficient electric charges for the foreign object 5 on the nonlinear resistance film 13 to move at an integrity check test voltage V50. At an operating voltage V60, the nonlinear resistance film is in a high resistance domain, and the uniform electric field will not supply electric charges needed for the foreign object 5 on the nonlinear resistance film 13 to move.

If the nonlinear resistance film 13 has the characteristic A shown in FIG. 6, the uniform electric field keeps the nonlinear resistance film 13 in the high resistance domain at the integrity check test voltage V50 in an integrity check test. No sufficient electric charges for the foreign object 5 to move are supplied to the foreign object 5 on the linear resistance film 13.

Suppose, as shown in FIG. 2, that the resin 18 constituting the nonlinear resistance film 13 is filled with a filler that has a permittivity lower than that of the nonlinear resistance powder material 14, such as hollow beads 21, so that the nonlinear resistance film 13 has a lower permittivity. This makes it possible, even with the same thickness such as one for high workability, to adjust the voltage to be applied to the nonlinear resistance film 13 to a higher value. That is, such settings as an integrity check test voltage V51 and an operating voltage V61 are possible.

The nonlinear resistance powder material 14 desirably has a particle size of several tens of micrometers so as to provide large contact areas. The filler such as the hollow beads 21 desirably has a particle size similar to or smaller than that of the nonlinear resistance powder material 14 so that the particles of the nonlinear resistance powder material 14 with which the resin 18 is filled can easily make contact with each other. The mixing ratio of the hollow beads 21 is desirably suppressed so as not to obstruct the mutual contact of the particles of the nonlinear resistance powder material 14.

In such a case, even if the nonlinear resistance film 13 has the characteristic A, the nonlinear resistance film 13 can enter the low resistance domain to supply sufficient electric charges for the foreign object 5 on the film to move in an integrity check test. When in operation, the nonlinear resistance film 13 is in the high resistance domain and can suppress the supply of electric charges needed for the foreign object 5 on the film to move.

According to the present embodiment, when the existing nonlinear resistance powder material 14 such as ZnO has a characteristic that is not capable of supplying a sufficient electric current at the integrity check test voltage, a filler having a permittivity lower than that of the nonlinear resistance powder material 14 is added. This can make an adjustment to increase the voltage to be applied to the nonlinear resistance 13 so that electric charges sufficient for the foreign object 5 to move can be supplied to the foreign object 5 in the integrity check test. Consequently, it becomes easier to find and remove the foreign object 5 by the integrity check test.

As is apparent from the foregoing description, the hermetically sealed insulating apparatus according to the present embodiment can be made more compact and improved in insulation reliability.

### [Second Embodiment]

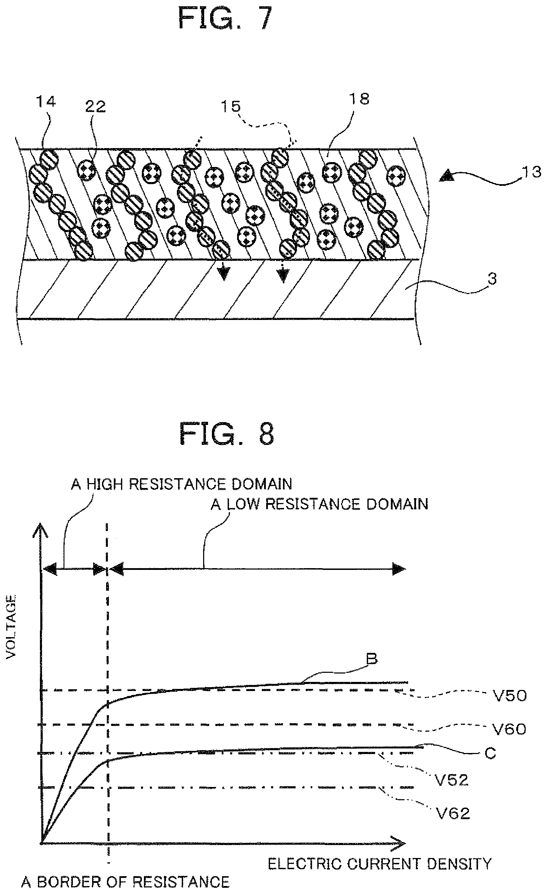

A second embodiment of the hermetically sealed insulating apparatus according to the present invention will be described with reference to FIGS. 7 and 8. FIG. 7 is a longitudinal sectional view showing part of a nonlinear resistance film 13 that is formed on the inside surface of the metal container 3 of the hermetically sealed insulating apparatus according to the present embodiment. FIG. 8 is a graph showing the characteristic of the nonlinear resistance film 13 formed on the inside surface of the metal container 3 of FIG. 7, or the relationship between the electric current density and the applied voltage.

The present embodiment is a modification of the first embodiment. Parts identical or similar to those of the first embodiment will be designated by the same reference symbols, and redundant description will be omitted. The hermetically sealed insulating apparatus according to the present embodiment is the same as the hermetically sealed insulating apparatus according to the first embodiment shown in FIG. 1 except in the nonlinear resistance film 13.

As shown in FIG. 7, the nonlinear resistance film 13 according to the present embodiment is formed by applying resin 18 to the inside surface of the metal container 3 in the form of a film, the resin 18 being filled with the nonlinear resistance powder material 14 as in the first embodiment and powder that has a permittivity higher than that of the nonlinear resistance powder material 14, such as alumina powder 22.

If the nonlinear resistance film 13 has the characteristic C shown in FIG. 8, the uniform electric field brings the nonlinear resistance film 13 into the low resistance domain at the operating voltage V60. This will supply sufficient electric charges for the foreign object 5 on the nonlinear resistance film 13 to move.

In contrast, if the alumina powder 22 or the like is added to increase the permittivity of the nonlinear resistance film 13 as shown in FIG. 7, it is possible, even with the same thickness such as one of high workability, to adjust the voltage to be applied to the nonlinear resistance film 13 to a lower value. That is, such settings as an integrity check test voltage V52 and an operating voltage V62 are possible.

As in the first embodiment, the nonlinear resistance powder material 14 desirably has a particle size of several tens of micrometers so as to provide large contact areas. The alumina powder 22 desirably has a particle size similar to or smaller than that of the nonlinear resistance powder material 14 so that the particles of the nonlinear resistance powder material 14 with which the resin 18 is filled can easily make contact with each other.

In such a case, even if the nonlinear resistance film 13 has the characteristic C, it is possible to bring the nonlinear resistance film 13 into the low resistance domain and supply sufficient electric charges for the foreign object 5 on the film to move at the integrity check test electric voltage V52. At the operating electric voltage V62, the nonlinear resistance film 13 is sometimes in the high resistance domain and suppresses the supply of electric charges needed for the foreign object 5 on the film to move.

According to the present embodiment, when the existing nonlinear resistance powder material 14 such as ZnO has a characteristic that will supply a sufficient electric current for the foreign object 5 to move at the operating voltage, a filler having a permittivity higher than that of the nonlinear resistance powder material 14 is added. This can make an adjustment to lower the voltage to be applied to the nonlinear resistance 13 so that electric charges sufficient for the foreign object 5 to move will not be supplied to the foreign object 5 at the operating applied voltage. This can facilitate finding and removing the foreign object 5 in an integrity check test, and reduce the effect of the foreign object 5 when in operation.

As is apparent from the foregoing description, the hermetically sealed insulating apparatus according to the present embodiment can be made more compact and improved in insulation reliability.

### [Third Embodiment]

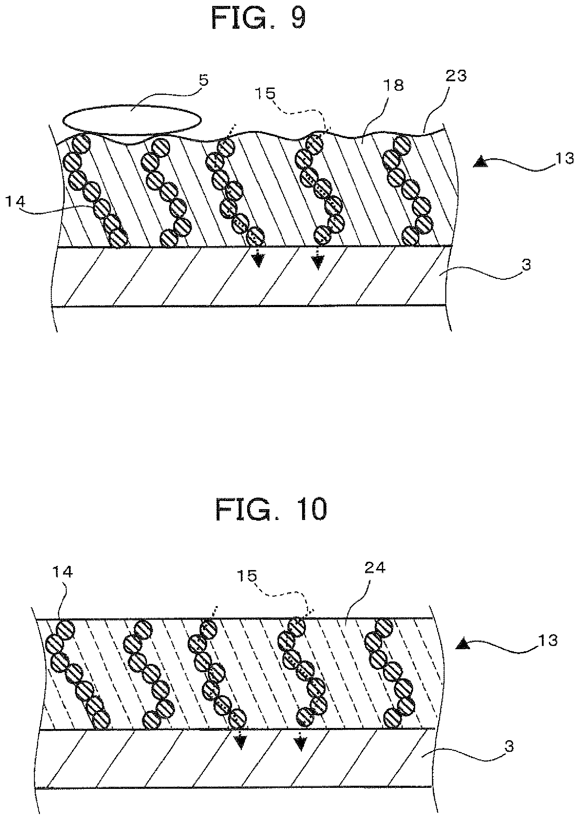

A third embodiment of the hermetically sealed insulating apparatus according to the present invention will be described with reference to FIG. 9. FIG. 9 is a longitudinal sectional view showing part of a nonlinear resistance film 13 that is formed on the inside surface of the metal container 3 of the hermetically sealed insulating apparatus according to the present embodiment.

The present embodiment is a modification of the first embodiment. Parts identical or similar to those of the first embodiment will be designated by the same reference symbols, and redundant description will be omitted. The hermetically sealed insulating apparatus according to the present embodiment is the same as the hermetically sealed insulating apparatus according to the first embodiment shown in FIG. 1 except in the nonlinear resistance film 13.

As shown in FIG. 9, the nonlinear resistance film 13 according to the present embodiment is formed by applying resin 18 to the inside surface of the metal container 3 in the form of a film, the resin 18 being filled with the nonlinear resistance powder material 14 as in the first embodiment. A plurality of projections and depressions 23 are formed on the inside surface of the nonlinear resistance film 13.

A foreign object 5 lying on the inside surface of the nonlinear resistance film 13 on the inner side of the container, if any, varies in movability depending on the amount of electric charge the foreign object 5 has.

In the case of the conventional insulating film 13a shown in FIG. 4, the amount of charge that is supplied to a foreign object 5 lying on the insulating film 13a, if any, by means of a leak electric current of the insulating film 13a is constantly small. It is therefore difficult to change the amount of supply of the electric charge by means of the leak electric current.

In contrast, in the case of the nonlinear resistance film 13, the amount of charge that is supplied from the nonlinear resistance film 13 to the foreign object 5 through a leak electric current varies with the nonlinear resistance characteristic of the nonlinear resistance film 13 and the voltage applied to the nonlinear resistance film 13. Furthermore, the amount of charge also varies with the contact area between the foreign object 5 and the nonlinear resistance film 13.

The formation of the projections and depressions 23 on the inside surface of the nonlinear resistance film 13 makes it possible to change the contact area between the foreign object 5 and the nonlinear resistance film 13. In the present embodiment, the contact area is made smaller by the formation of the projections and depressions 23. This can change the amount of leak electric current paths formed between the nonlinear resistance film 13 and the foreign object 5, thereby adjusting the electric charges to be supplied to the foreign object 5.

Typical harmful foreign objects 5 have a size or diameter of approximately 100 µm or greater. The adjoining projections are therefore desirably formed at intervals of 100 µm or less so that no foreign object 5 should fall into the depressions. That is, the amount of the contact area with the foreign object 5 can be adjusted by adjusting the surface roughness, which is determined by the intervals between the projections or between the depressions, so that the intervals fall within the range of 100 µm or less.

As a result, it is possible to adjust the amount of charge supplied from the nonlinear resistance film 13 to the foreign object 5, so that the foreign object 5 is less likely to move under the operating electric field while the foreign object 5 can be moved more easily in an integrity test for easy detection and removal.

As is apparent from the foregoing description, the hermetically sealed insulating apparatus according to the present embodiment can be made more compact and improved in insulation reliability.

The resin 18 of the nonlinear resistance film 13 of the present embodiment may also be filled with a filler that has a permittivity different from that of the nonlinear resistance powder material 14, such as hollow beads 21 and alumina powder 22.

### [Fourth Embodiment]

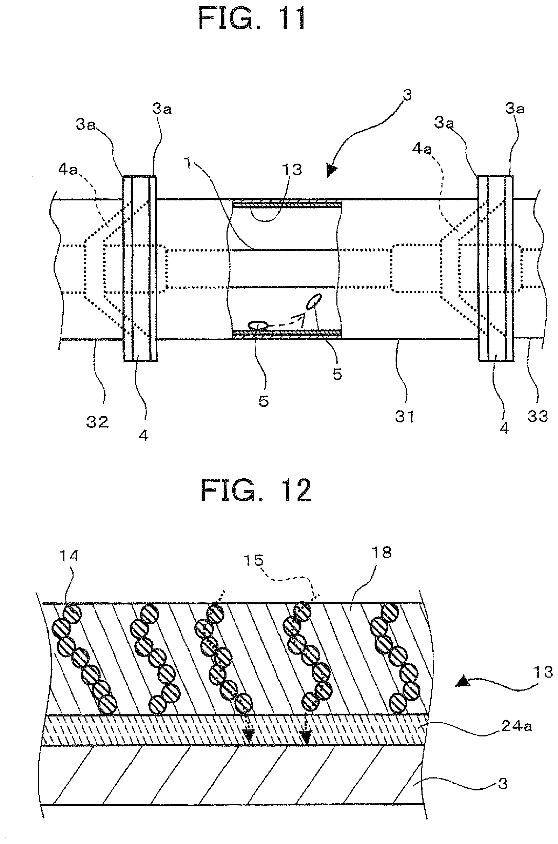

A fourth embodiment of the hermetically sealed insulating apparatus which is not claimed as the present invention will be described with reference to FIGS. 10 and 11. FIG. 10 is a longitudinal sectional view showing part of a nonlinear resistance film 13 that is formed on the inside surface of the metal container 3 of the hermetically sealed insulating apparatus according to the present embodiment. FIG. 11 is a partly-broken schematic longitudinal sectional view showing part of the hermetically sealed insulating apparatus according to the present embodiment, showing the behavior of a foreign object 5 adhering to the nonlinear resistance film 13.

The present embodiment is a modification of the first embodiment. Parts identical or similar to those of the first embodiment will be designated by the same reference symbols, and redundant description will be omitted.

As shown in FIG. 10, the nonlinear resistance film 13 according to the present embodiment is formed by applying an elastomer 24 to the inside surface of the metal container 3 in the form of a film, the elastomer 24 being filled with the nonlinear resistance powder material 14 as in the first embodiment.

As shown in FIG. 11, a foreign object 5 lying in the metal container 3, if any, may start to move because of the propagation of mechanical vibrations to the metal container 3 or vibrations of the metal container 3.

Meanwhile, the layer of the elastomer 24 has an elastic characteristic, which can act to suppress the propagation of mechanical vibrations of the metal container 3 to the inside surface of the nonlinear resistance film 13. This makes it difficult for vibrations to reach the foreign object 5.

According to the present embodiment, it is possible to facilitate finding and removing the foreign object 5 in an integrity check test, and make the foreign object 5 less likely to move under mechanical vibrations when in operation. The hermetically sealed insulating apparatus can thus be made more compact and improved in insulation reliability.

The layer of the elastomer 24 of the nonlinear resistance film 13 according to the present embodiment may also be filled with a filler that has a permittivity different from that of the nonlinear resistance powder material 14, such as hollow beads 21 and alumina powder 22.

### [Fifth Embodiment]

A fifth embodiment of the hermetically sealed insulating apparatus which is not claimed as the present invention will be described with reference to FIG. 12.
FIG. 12 is a longitudinal sectional view showing part of a nonlinear resistance film 13 that is formed on the inside surface of the metal container 3 of the hermetically sealed insulating apparatus according to the present embodiment.

The present embodiment is a modification of the first embodiment. Parts identical or similar to those of the first embodiment will be designated by the same reference symbols, and redundant description will be omitted. The hermetically sealed insulating apparatus according to the present embodiment is the same as the hermetically sealed insulating apparatus according to the first embodiment shown in FIG. 1 except in the nonlinear resistance film 13.

As shown in FIG. 12, the nonlinear resistance film 13 according to the present embodiment is formed by applying resin 18 to the inside surface of the metal container 3 in the form of a film, the resin 18 being filled with the nonlinear resistance powder material 14 as in the first embodiment.

An elastomer intermediate film 24a made of an elastomer having the electrical resistance lower than that of the nonlinear resistance film 13 is interposed between the nonlinear resistance film 13 and the inside surface of the metal container 3. Even if mechanical vibrations occur on the metal container 3, the elastic characteristic of the elastomer intermediate film 24a can make it difficult for the vibrations to reach the nonlinear resistance film 13.

Since the foreign object 5 is in contact with the nonlinear resistance film 13, it is possible to maintain the field relaxing effect and the charge supply characteristic of the nonlinear resistance film 13 with respect to the foreign object 5. Since the elastomer intermediate film 24a has an electrical resistance lower than that of the nonlinear resistance film 13 as described above, the intensity of the leak electric current is mostly dominated by the characteristic of the nonlinear resistance film 13.

This can facilitate finding and removing the foreign object 5 in an integrity check test, and make the foreign object 5 less likely to move under mechanical vibrations when in operation. The hermetically sealed insulating apparatus can thus be made more compact and improved in insulation reliability.

The resin 18 of the nonlinear resistance film 13 of the present embodiment may also be filled with a filler that has a permittivity different from that of the nonlinear resistance powder material 14, such as hollow beads 21 and alumina powder 22.

### [Other Embodiments]

The foregoing embodiments have been described for illustrative purposes in explaining the present invention, and are not intended to limit the inventions set forth in the claims. The configuration of each part of the present invention is not limited to the foregoing embodiments, and various modifications may be made within the technical scope of the claims.

For example, the first to fifth embodiments have dealt with the cases where ZnO is used as the nonlinear resistance powder material 14. However, the nonlinear resistance powder material is not limited thereto. Any material is applicable as long as it has the characteristic that the resistance value decreases with the electric current density.

The characteristics of the fourth embodiment and the characteristics of the fifth embodiment may be combined with those of the third embodiment.

### EXPLANATION OF REFERECNE SYMBOLS

1: High voltage conductor
2: Insulating gas
3: Metal container
3a: End flange part
4: Spacer
4a: Insulating member
5: Foreign object
10: Electric field concentration portion
13: Nonlinear resistance film
13a: Conventional insulating film
14: Nonlinear resistance powder material
15: Main path of leak electric current
16: Equipotential line
17: Electric field relaxed portion
18: Resin
21: Hollow bead
22: Alumina powder
23: Projections and depressions
24: Elastomer
24a: Elastomer intermediate film
31: First metal container
32: Second metal container
33: Third metal container

## Claims

1. A hermetically sealed insulating apparatus comprising:
a high voltage conductor (1) that extends in an axial direction;
a metal container (3) that covers the high voltage conductor (1) so as to leave a radial gap to the high voltage conductor (1), the gap being filled with insulating gas (2); and
a nonlinear resistance film (13) that is formed on an inside surface of the metal container (3), and has; a nonlinear resistance material (14) having a nonlinear resistance characteristic of decreasing in resistance with an increasing current density,
**characterized in that** the nonlinear resistance film (13) further has a filler (21, 22) having a permittivity different from that of the nonlinear resistance material (14).

2. The hermetically sealed insulating apparatus according to claim 1, wherein the filler (21) has a permittivity lower than that of the nonlinear resistance material (14).

3. The hermetically sealed insulating apparatus according to claim 2, wherein the filler (21) is a hollow particulate member.

4. The hermetically sealed insulating apparatus according to claim 1, wherein the filler (22) has a permittivity higher than that of the nonlinear resistance material (14).

5. The hermetically sealed insulating apparatus according to claim 4, wherein the nonlinear resistance material (14) contains ZnO, and the filler (contains alumina.

6. The hermetically sealed insulating apparatus according to any one of claims 1 to 5, wherein the nonlinear resistance film (13) is made of resin (18, 24) that is filled with the nonlinear resistance material (14).

7. The hermetically sealed insulating apparatus according to claim 6, wherein the resin (24) is an elastomer.

8. The hermetically sealed insulating apparatus according to any one of claims 1 to 5, comprising an intermediate film (24a) of an elastomer that is formed between the inside surface of the metal container (3) and the nonlinear resistance film (13).

9. The hermetically sealed insulating apparatus according to any one of claims 1 to 5, wherein a plurality of projections and depressions (23) are formed on a surface of the nonlinear resistance film (13) on a side of the high voltage conductor (1).

10. A hermetically sealed insulating apparatus comprising:
a high voltage conductor (1) that extends in an axial direction;
a metal container (3) that covers the high voltage conductor (1) so as to leave a radial gap to the high voltage conductor (1), the gap being filled with insulating gas (2); and
a nonlinear resistance film (13) that is formed on an inside surface of the metal container (3), is made of resin (18) filled with nonlinear resistance material (14) having a nonlinear resistance characteristic of decreasing in resistance with an increasing electric current density,
**characterized in that** the nonlinear resistance film (13) has a plurality of projections and depressions (23) formed on its surface on the side of the high voltage conductor (1).

## Patentansprüche

1. Hermetisch verschlossene Isoliervorrichtung, umfassend:
einen Hochspannungsleiter (1), der sich in axialer Richtung erstreckt;
einen Metallbehälter (3), der den Hochspannungsleiter (1) so abdeckt, dass er einen radialen Spalt zu dem Hochspannungsleiter (1) freilässt, wobei der Spalt mit einem Isoliergas (2) gefüllt wird; und
einen nichtlinearen Widerstandsfilm (13), der auf einer Innenfläche des Metallbehälters (3) ausgebildet ist und Folgendes aufweist: ein nichtlineares Widerstandsmaterial (14), das eine nichtlineare Widerstandseigenschaft des mit steigender Stromdichte abnehmenden Widerstands aufweist,
**dadurch gekennzeichnet, dass** der nichtlineare Widerstandsfilm (13) weiter einen Füllstoff (21, 22), der eine andere Permittivität aufweist als das nichtlineare Widerstandsmaterial (14) aufweist.

2. Hermetisch verschlossene Isoliervorrichtung nach Anspruch 1, wobei der Füllstoff (21) eine geringere Permittivität als das nichtlineare Widerstandsmaterial (14) aufweist.

3. Hermetisch verschlossene Isoliervorrichtung nach Anspruch 2, wobei der Füllstoff (21) ein hohles, teilchenförmiges Element ist.

4. Hermetisch verschlossene Isoliervorrichtung nach Anspruch 1, wobei der Füllstoff (22) eine höhere Permittivität als das nichtlineare Widerstandsmaterial (14) aufweist.

5. Hermetisch verschlossene Isoliervorrichtung nach Anspruch 4, wobei das nichtlineare Widerstandsmaterial (14) ZnO enthält und der Füllstoff Tonerde enthält.

6. Hermetisch verschlossene Isoliervorrichtung nach einem der Ansprüche 1 bis 5, wobei der nichtlineare Widerstandsfilm (13) aus Harz (18, 24) besteht, das mit dem nichtlinearen Widerstandsmaterial (14) gefüllt ist.

7. Hermetisch verschlossene Isoliervorrichtung nach Anspruch 6, wobei das Harz (24) ein Elastomer ist.

8. Hermetisch verschlossene Isoliervorrichtung nach einem der Ansprüche 1 bis 5, umfassend einen Zwischenfilm (24a) aus einem Elastomer, der zwischen der Innenfläche des Metallbehälters (3) und dem nichtlinearen Widerstandsfilm (13) ausgebildet ist.

9. Hermetisch verschlossene Isoliervorrichtung nach einem der Ansprüche 1 bis 5, wobei auf einer Seite des Hochspannungsleiters (1) eine Vielzahl von Vorsprüngen und Vertiefungen (23) auf einer Fläche des nichtlinearen Widerstandsfilms (13) ausgebildet ist.

10. Hermetisch verschlossene Isoliervorrichtung, umfassend:
einen Hochspannungsleiter (1), der sich in axialer Richtung erstreckt;
einen Metallbehälter (3), der den Hochspannungsleiter (1) so abdeckt, dass er einen radialen Spalt zu dem Hochspannungsleiter (1) freilässt, wobei der Spalt mit einem Isoliergas (2) gefüllt wird; und
einen nichtlinearen Widerstandsfilm (13), der auf einer Innenfläche des Metallbehälters (3) ausgebildet ist, aus Harz (18) besteht und mit nichtlinearem Widerstandsmaterial (14), das eine nichtlineare Widerstandseigenschaft des mit steigender Stromdichte abnehmenden Widerstands aufweist, gefüllt ist,
**dadurch gekennzeichnet, dass** auf der Fläche des nichtlinearen Widerstandsfilms (13) auf einer Seite des Hochspannungsleiters (1) eine Vielzahl von Vorsprüngen und Vertiefungen (23) ausgebildet ist.

## Revendications

1. Appareil isolant fermé de manière hermétique comprenant :
un conducteur haute tension (1) qui s'étend dans une direction axiale ;
un récipient métallique (3) qui recouvre le conducteur haute tension (1) de façon à laisser subsister un espace libre radial par rapport au conducteur haute tension (1), l'espace libre étant rempli avec un gaz isolant (2) ; et
un film à résistance non linéaire (13) qui est formé sur une surface interne du récipient métallique (3) et possède ; une matière à résistance non linéaire (14) possédant à titre de caractéristique de résistance non linéaire une diminution de la résistance de manière proportionnelle à une augmentation de la densité de courant,
**caractérisé en ce que** le film à résistance non linéaire (13) possède en outre une matière de remplissage (21, 22) dont la permittivité est différente de celle de la matière à résistance non linéaire (14).

2. Appareil isolant fermé de manière hermétique selon la revendication 1, dans lequel la matière de remplissage (21) possède une permittivité inférieure à celle de la matière à résistance non linéaire (14).

3. Appareil isolant fermé de manière hermétique selon la revendication 2, dans lequel la matière de remplissage (21) est un élément particulaire creux.

4. Appareil isolant fermé de manière hermétique selon la revendication 1, dans lequel la matière de remplissage (22) possède une permittivité supérieure à celle de la matière à résistance non linéaire (14).

5. Appareil isolant fermé de manière hermétique selon la revendication 4, dans lequel la matière à résistance non linéaire (14) contient du ZnO et la matière de remplissage contient de l'alumine.

6. Appareil isolant fermé de manière hermétique selon l'une quelconque des revendications 1 à 5, dans lequel le film à résistance non linéaire (13) est réalisé à partir d'une résine (18, 24) qui est remplie avec la matière à résistance non linéaire (14).

7. Appareil isolant fermé de manière hermétique selon la revendication 6, dans lequel la résine (24) est un élastomère.

8. Appareil isolant fermé de manière hermétique selon l'une quelconque des revendications 1 à 5, comprenant un film intermédiaire (24a) d'un élastomère, qui est formé entre la surface interne du récipient métallique (3) et le film à résistance non linéaire (13).

9. Appareil isolant fermé de manière hermétique selon l'une quelconque des revendications 1 à 5, dans lequel une pluralité de projections et de dépressions (23) sont formées sur une surface du film à résistance non linéaire (13) sur un côté du conducteur haute tension (1).

10. Appareil isolant fermé de manière hermétique comprenant :
un conducteur haute tension (1) qui s'étend dans une direction axiale ;
un récipient métallique (3) qui recouvre le conducteur haute tension (1) de façon à laisser subsister un espace libre radial par rapport au conducteur haute tension (1), l'espace libre étant rempli avec un gaz isolant (2) ; et
un film à résistance non linéaire (13) qui est formé sur une surface interne du récipient métallique (3), est réalisé à partir d'une résine (18) remplie avec une matière à résistance non linéaire (14) possédant à titre de caractéristique de résistance non linéaire une diminution de la résistance de manière proportionnelle à une augmentation de la densité de courant,
**caractérisé en ce que** le film à résistance non linéaire (13) possède une pluralité de projections et de dépressions (23) formées sur sa surface sur le côté du conducteur haute tension (1).
